# EUROPÄISCHE PATENTSCHRIFT

(11) **EP 1 544 030 B1**
(45) Veröffentlichungstag und Bekanntmachung des Hinweises auf die Patenterteilung: **29.03.2006**
(21) Anmeldenummer: 04028514.0
(22) Anmeldetag: 02.12.2004
(51) Int. Cl.: B60P 1/02

(54) **Strassenfahrzeug zum Transport von Behältnissen**
A road vehicle for transporting containers
Véhicule routier pour le transport des récipients

(30) Priorität: 19.12.2003 DE 10360638
(43) Veröffentlichungstag der Anmeldung: 22.06.2005
(73) Patentinhaber: Franz Zentis Logistik Service GmbH, 52070 Aachen (DE)
(72) Erfinder: Biermeier, Andreas, 52159 Roetgen (DE); Heinrichs, Josef, 52222 Stolberg (DE)
(74) Vertreter: Bauer, Dirk

(56) Entgegenhaltungen:
- DE-U- 20 308 990
- GB-A- 2 364 295
- US-A- 5 651 657
- US-A1- 2003 035 695

## Beschreibung

Die Erfindung betrifft ein Straßenfahrzeug zum Transport von Behältnissen, mit einem von einer Ladefläche, Wänden und einer Decke begrenzten Laderaum, sowie einer Verlagerungsvorrichtung, die von einer Aufnahmestellung in eine Lagerstellung bewegbar ist, wodurch mindestens ein Behältnis von einer Grundposition, in der es ladeflächennah innerhalb des Laderaums angeordnet ist und auf der Verlagerungsvorrichtung aufgebbar oder von dieser aufnehmbar ist, in eine Einlagerungsposition innerhalb des Laderaums überführbar ist, in der zwischen der Ladefläche und der Verlagerungsvorrichtung sowie der Ladefläche und dem Behältnis ein Freiraum verbleibt. Ein gattungsgemässes Strassenfahrzeug ist in GB-A-2 364 295 offenbart.

Derartige Straßenfahrzeuge sind dem Fachmann allgemein bekannt und werden zum Beispiel verwendet, wenn erhöhte Anforderungen hinsichtlich der Flexibilität der Laderaumabmessungen bei gleichzeitiger optimierter Laderaumnutzung und Transportsicherheit bestehen. Die dem Fachmann geläufigste Form derartiger Fahrzeuge ist diejenige, bei welcher ein in etwa der Ladefläche oder Teilabschnitten derselben entsprechender Hubboden verwendet wird, der während des Beladungsvorgangs mit den Behältnissen auf der Ladefläche aufliegt. Meist mittels Hydraulikvorrichtungen in Kombination mit einem scherenartigen Gestell wird anschließend der Hubboden angehoben, und zwar bis sich die Behältnisse kurz unterhalb der Decke des Laderaums befinden. Der entstandene Freiraum unterhalb des angehobenen Hubbodens kann anschließend für die Beladung mit weiteren Behältnissen genutzt werden. Jedoch ist ein derartiges Straßenfahrzeug bei bestimmten Anforderungen hinsichtlich der Laderaumausnutzung nicht wirtschaftlich einsetzbar und zeichnet sich durch einen zu großen Nutzlastverlust aus.

Zum Beispiel kennt die Lebensmittelindustrie Behältnisse für Lebensmittel, welche eine ihrem Inhalt und dessen Verwendung optimal angepasste Form besitzen, deren Transport sich gerade dadurch jedoch als aufwändiger erweist, als der bei herkömmlichen Behältnissen. Eine Form derartiger Behältnisse für fließfähige Lebensmittel wie zum Beispiel Fruchtzubereitungen ist ein zylindrischer Container aus Stahl, der stehend auf einem Untergestell mit quadratischer Grundfläche befestigt ist. Ein derartiger Container ist hinsichtlich seiner Höhe erheblich größer als in seiner Breite/seinem Durchmesser. Aus Stabilitätsgründen ist bei derartigen Behältnissen die Stapelhöhe bei einer stationären Lagerung unter üblichen Bedingungen auf maximal zwei Container übereinander begrenzt.

Bei einem Transport mit Straßenfahrzeugen ohne Verlagerungsvorrichtung muss jedoch selbst auf diese Stapelung verzichtet werden, da durch transporttypische Bewegungen, wie Beschleunigung und Abbremsung des Transportfahrzeugs, ein solcher Stapel instabil werden würde und ein Verzurren zu aufwändig und unsicher erscheint.

Ein Straßenfahrzeug mit vorgenanntem Hubboden ließe sich für derartige Behältnisse ebenfalls nicht verwenden, da die Summe der Höhe von zwei stehenden Containern und des Hubbodens die verfügbare Raumhöhe der gebräuchlichen Straßenfahrzeuge erheblich übersteigen würde, oder bei Verwendung eigens für diesen Zweck gebauter Fahrzeuge, diese die gesetzlich zugelassene maximale Fahrzeughöhe überschreiten.

### Aufgabe

Aufgabe der Erfindung ist es, ein Straßenfahrzeug zum Transport von Behältnissen vorzuschlagen, welches die Vorteile der bekannten Verlagerungsvorrichtungen ohne die erläuterten Nachteile nutzt.

### Lösung der Aufgabe

Die Aufgabe wird erfindungsgemäß dadurch gelöst, dass das Behältnis in der Einlagerungsposition gegenüber der Grundposition gedreht ist.

Durch eine Drehung des Behältnisses von einer Grund- in eine Einlagerungsposition kann bei solchen Behältnissen, deren Höhe größer als deren Breite ist, die Einlagerungshöhe erheblich und vorteilhaft minimiert werden, und zwar derart, dass der durch die Drehbewegung entstandene Freiraum für eine Einlagerung weiterer nicht notwendigerweise zu drehender Behältnisse genutzt werden kann. Die Abmessungen eines solchen Fahrzeugs brauchen aufgrund der Erfindung nicht von den üblichen und zulässigen Abmessungen abzuweichen. Insbesondere wird mit der Erfindung ein Freiraum im Laderaum nutzbar, der sich bei bestimmten Behältnissen in stehender Anordnung (Grundposition) oberhalb derselben befindet, wobei der Freiraum nicht die Höhe eines Behältnisses in der Grundposition besitzt.

Weiter ist noch vorgesehen, dass die Verlagerungsvorrichtung ein Aufnahmegestell aufweist, welches L-förmige Aufnahmegabeln aufweist, um das Behältnis optimal halten und während des Transportes abstützen zu können. Die Aufnahmegabeln können sich zum Beispiel in Freiräume in dem Untergestell erstrecken und so eine einfache Fixierung des Behältnisses bewirken.

Die Erfindung weiter fortbildend ist noch vorteilhaft, dass das Aufnahmegestell um eine parallel zu der Ladefläche verlaufende Achse drehbar gelagert ist. Dadurch kann das Behältnis durch das Aufnahmegestell seine Drehbewegung ausführen und wird zudem noch sicherer von dem Aufnahmegestell gehalten und abgestützt.

Eine Weiterbildung der Erfindung ist es, dass das Aufnahmegestell der Verlagerungsvorrichtung an mindestens einem Schlitten befestigt ist, der ausschließlich translatorisch bewegbar ist. Translatorische Bewegungen lassen sich relativ einfach, beispielsweise mittels Hydraulikhubzylindern erzeugen und steuern und sind deshalb besonders geeignet, eine solche Bewegungsrichtung des Schlittens auszuführen. Die ausschließliche Bewegbarkeit des Schlittens in translatorische Richtungen kann zum Beispiel mittels C-Profilen realisiert werden, entlang derer sich der Schlitten bewegt, indem Rollen, die an dem Schlitten befestigt sind, in das C-Profil eingreifen.

Die Erfindung weiter ausgestaltend wird vorgeschlagen, dass die translatorische Bewegung des Schlittens des Aufnahmegestells durch ein Anschlagelement zumindest teilweise in eine Drehbewegung überführbar ist. Die Verwendung passiver Bauelemente wie eines Anschlagelementes stellt eine vorteilhafte, da kostengünstige und wartungsfreie Möglichkeit dar, eine Bewegungskomponente in eine andere zu überführen. Eine separate Antriebsvorrichtung für die Drehbewegung ist aufgrund der kombinierten rotatorisch - translatorischen Bewegung nicht erforderlich.

Weiter wird die Erfindung dadurch ausgestaltet, dass das Aufnahmegestell von der Auf nahmestellung um einen im wesentlichen rechten Winkel in die Lagerstellung drehbar ist.

Dadurch, dass das Aufnahmegestell im rechten Winkel zur Aufnahmestellung gedreht wird, wird das von ihm aufgenommene Behältnis ebenfalls um 90 Grad gedreht und damit von seiner Grundposition in seine Einlagerungsposition überführt. Dabei einen rechten Winkel vorzusehen, ist deshalb vorteilhaft, weil bei Drehung um diesen Winkel ein Maximum an Lagestabilität erreicht wird, da der Schwerpunkt des Behältnisses bei diesem Winkel bei gleichzeitig großer Auflagefläche am niedrigsten ist.

Es wird noch vorgeschlagen, die Erfindung weiterzubilden, indem das Aufnahmegestell zusammenklappbar und dadurch in eine deckennähere Stellung als die Lagerstellung bewegbar ist. Dadurch wird erreicht, dass fast das gesamte Laderaumvolumen für andere Anwendungen, d. h. zum Beispiel den Transport gänzlich anderer Güter nutzen lässt und dass durch die so erreichte Arbeitshöhe ein Be- und Entladen von Behältnissen bzw. ein Rangieren im Laderaum, beispielsweise mit Hilfe eines Handhubwagens, des Straßenfahrzeugs erheblich vereinfacht wird.

Weiter wird noch vorgeschlagen, dass das Aufnahmegestell und Teile der Decke des Laderaums im Bereich der Kontaktstellen mit dem Behältnis mit einem elastischen Material sowie mit dem Behältnis angepassten Aussparungen versehen sind. Hierdurch wird erreicht, dass ein ansonsten zwischen Metallteilen der Verlagerungsvorrichtung und dem Behältnis stattfindender direkter Kontakt und damit eine mögliche Beschädigung vermieden wird. Die Aussparungen sorgen zusätzlich für eine ausreichend sichere Einlagerung des Behältnisses bei einem Transport, da sie das Behältnis wirksam vor Verrückung und Verrutschen bewahren.

Schließlich ist noch erfindungsweiterbildend vorgesehen, dass von jeder Verlagerungsvorrichtung zwei Behältnisse aufnehmbar sind und dass in Längsrichtung des Laderaums eine Mehrzahl von Verlagerungsvorrichtungen hintereinander angeordnet sind, wobei die Aufnahmegabeln einer Zugangsöffnung zu dem Laderaum zugeordneten Verlagerungsvorrichtung in der Aufnahmestellung mit ihren Vorderenden der Zugangsöffnung abgewandt sind, wohingegen die Vorderenden der Ladegabeln sämtlicher übriger Verlagerungsvorrichtungen in der Aufnahmestellung der Zugangsöffnung zugewandt sind. Eine derartige Anordnung ist dann vorteilhaft, wenn bei Beladung des Fahrzeugs keine Laderampe zur Verfügung steht und deshalb ein zusätzlicher Rangierplatz im Fahrzeuginneren benötigt wird, um die der Zugriffsöffnung zugeordnete Verlagerungsvorrichtung zu bestücken.

Außerdem ist noch vorgesehen, dass sämtliche Verlagerungsvorrichtungen mittels jeweils mindestens eines Hydraulikhubzylinders antreibbar sind, die mittels desselben Hydraulikaggregats mit Druck beaufschlagbar sind. Die Verwendung von Hydraulikhubzylindern ist von Vorteil, weil es sich vor allem um Hub- und Senkbewegungen handelt, welche zur Einlagerung der Behältnisse auszuführen sind und somit Hydraulikhubzylinder für einen derartigen Einsatz ideal sind. Für alle Hydraulikhubzylinder ein einziges Hydraulikaggregat zu verwenden, spart Investitionskosten sowie Gewicht und damit Transportkosten aufgrund geringeren Kraftstoffverbrauchs.

Die Erfindung wird nachfolgend anhand eines Ausführungsbeispieles näher erläutert. Dabei zeigen im einzelnen:
- Figur 1:: eine perspektivische Teilansicht eines Laderaums eines Straßenfahrzeuges mit einer Verlagerungsvorrichtung in einer Aufnahmestellung,
- Figur 2:: wie Figur 1, jedoch mit der Verlagerungsvorrichtung in einer ersten Zwischenstellung,
- Figur 3:: wie Figur 1, jedoch mit der Verlagerungsvorrichtung in einer zweiten Zwischenstellung,
- Figur 4:: wie Figur 1, jedoch mit der Verlagerungsvorrichtung in einer Lagerstellung,
- Figur 5:: einen Ausschnitt aus einer perspektivischen Seitenansicht der Verlagerungsvorrichtung,
- Figur 6:: einen Ausschnitt aus einer weiteren perspektivischen Seitenansicht der Verlagerungsvorrichtung,
- Figur 7:: eine schematische Seitenansicht eines Behältnisses,
- Figur 8:: eine weitere perspektivische Teilansicht des Laderaums des Straßenfahrzeuges gemäß Figur 1 mit der Verlagerungsvorrichtung in der Aufnahmestellung sowie zwei Behältnissen in der Grundposition,
- Figur 9:: wie Figur 8, jedoch mit der Verlagerungsvorrichtung in einer zweiten Zwischenstellung,
- Figur 10:: wie Figur 8, jedoch mit der Verlagerungsvorrichtung in der Lagerstellung und den Behältnissen in der Einlagerungsposition,

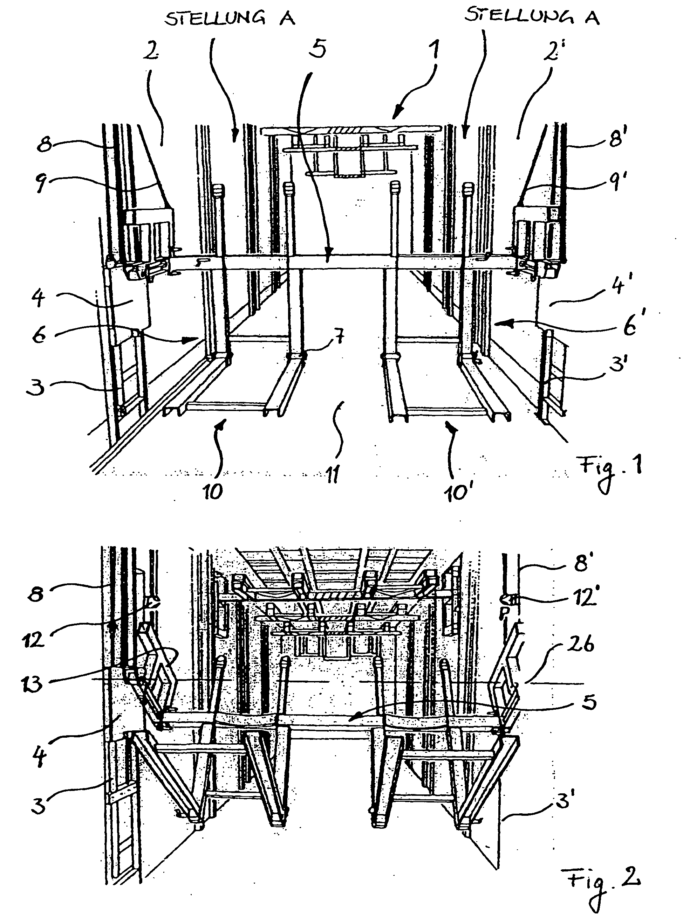

In Figur 1 ist eine perspektivische Teilansicht eines Laderaums eines nicht näher dargestellten Straßenfahrzeuges mit einer Verlagerungsvorrichtung 1 in einer Aufnahmestellung A gezeigt. Die Verlagerungsvorrichtung 1, die spiegelsymmetrisch zu einer vertikalen Mittelebene des Straßenfahrzeugs angeordnet ist, besteht aus zwei an Wänden 2, 2' des Straßenfahrzeugs angebrachten Rahmen 3, 3', die als doppelte C-Profilschienenkonstruktion ausgebildet sind, und Schlitten 4, 4', welche in den C-Profilschienen der Rahmen 3, 3' auf nicht sichtbaren Rollen entlang laufen sowie aus einem zwischen den gegenüberliegenden Schlitten 4, 4' drehbar befestigten Aufnahmegestell 5, das zwei Aufnahmegabeln 6, 6' aufweist. Jede der Aufnahmegabeln 6, 6' ist L-förmig und besteht aus Stahlprofilen, wobei für eine Aufnahmegabel 6, 6' die beiden Gelenkpunkte der beiden "L-Schenkel" jeweils ein Scharnier 7 aufweisen. Der Öffnungswinkel des "L" ist auf maximal 90 Grad begrenzt.

Das Aufnahmegestell 5 wird in der in seiner Aufnahmestellung A durch Seilpaare 8, 8', 9, 9' gehalten, von denen ein Seilpaar 9, 9' eine derartige Länge aufweist, dass zwei Aufnahmerahmen 10, 10' der Aufnahmegabel 6, 6' in der Aufnahmestellung A in kleinem Abstand parallel über der Ladefläche 11 gehalten werden. Dabei fängt das Seilpaar 9, 9' einen Teil der von dem Aufnahmegestell 5 ausgeübten Schwerkraft auf und leitet diesen an den an ihm befestigten Rahmen 3, 3' weiter.

Figur 2 zeigt das in Bezug auf die in der Figur 1 gezeigte Aufnahmestellung A leicht von dem Seilpaar 8, 8' über die Schlitten 4, 4' angehobene Aufnahmegestell 5, welches sich zudem geringfügig um eine durch die beiden drehbaren Befestigungspunkte an den beiden Schlitten 4, 4' verlaufende Drehachse 26 gedreht hat. Die Initialdrehung wird durch die Lage des Schwerpunkts des Aufnahmegestells in Bezug auf die horizontale Drehachse 26 selbsttätig ausgeführt. Zudem zeigt die Figur 2 Anschlagelemente 12, 12' in Form von drehbaren Rollen, die an den Rahmen 3, 3' befestigt sind.

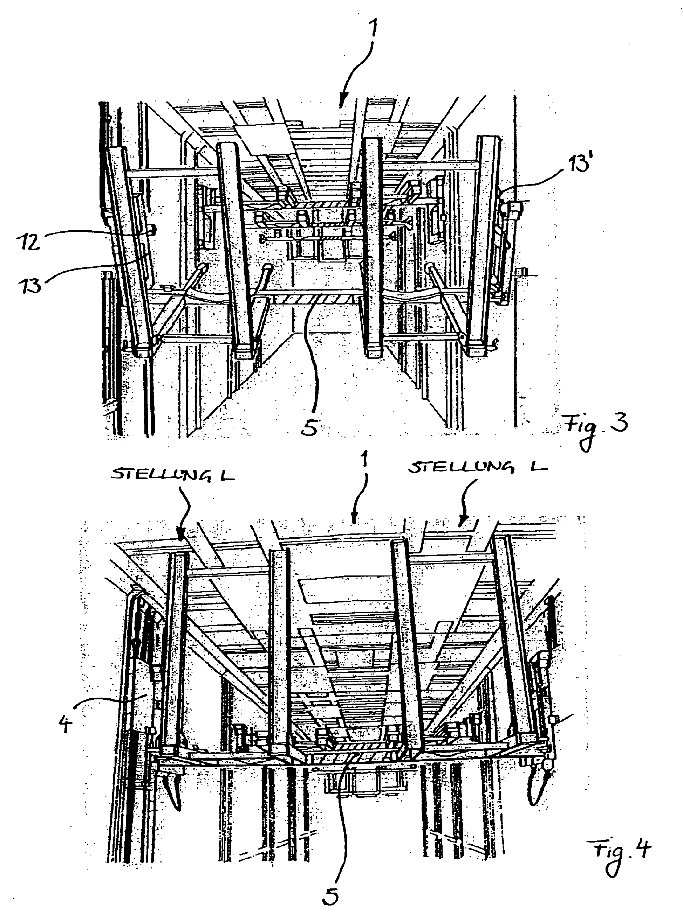

Figur 3 zeigt das in Bezug auf Figur 2 weiter angehobene Aufnahmegestell 5, welches zudem noch weiter um die horizontale Drehachse 26 - und zwar im selben Drehsinn wie bei Figur 2 gezeigt - gedreht ist. Die Anschlagelemente 12, 12' stehen hierbei - im Gegensatz zu Figur 1- in Kontakt mit einer Anschlagschiene 13, 13', die mit dem Aufnahmegestell 5 verschweißt ist.

Figur 4 zeigt das bis zur Lagerstellung L angehobene Aufnahmegestell 5. Dabei ist das Aufnahmegestell 5 in seiner Lagerstellung L gegenüber der Aufnahmestellung A um etwa 90 Grad gedreht.

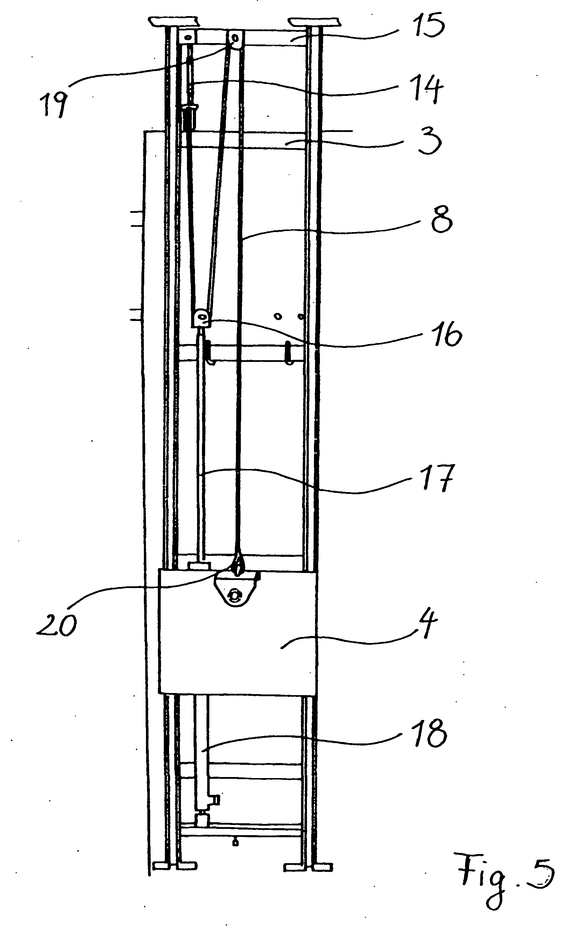

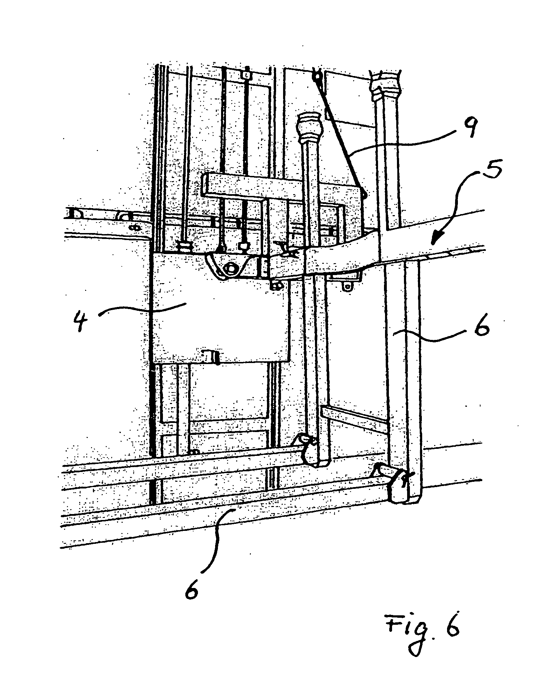

Figur 5 zeigt den Rahmen 3 mit der Führung des Seils 8. Mit einen Ende ist das Seil 8 an einem Spannelement 14 befestigt, welches wiederum mit einer oberen Querschiene 15 des Rahmens 3 verschraubt ist. Von dort wird das Seil 8 über durch eine untere Rolle 16, die mit einer Hubstange 17 eines Hydraulikhubzylinders 18 verschraubt ist, geführt. Das Seil 8 wird weiter durch eine ebenfalls mit der Querschiene 15 des Rahmens 3 verschraubte obere Rolle 19 geführt, um schließlich mittels eines Auges 20 des Seils 8 mit dem Schlitten 4 verhakt zu werden. Der Hydraulikhubzylinder 18 ist im übrigen fest mit dem Rahmen 3 verbunden und vertikal auf diesem angeordnet. Durch eine Erhöhung des hydraulischen Drucks wird die Hubstange 17 des Hydraulikhubzylinders 18 in diesen eingezogen und dadurch der über die Seilführung des Seils 8 mit ihm verbundene Schlitten 4 zu einer Hebebewegung gezwungen bei welcher er den doppelten Weg der Hubstange 17 zurücklegt (Flaschenzug-Prinzip). Natürlich ist die Anordnung aller Elemente bezüglich des gegen-überliegenden Rahmens 3' und der Führung des Seils 8' zur obigen Beschreibung äquivalent, hier jedoch nicht explizit gezeigt.

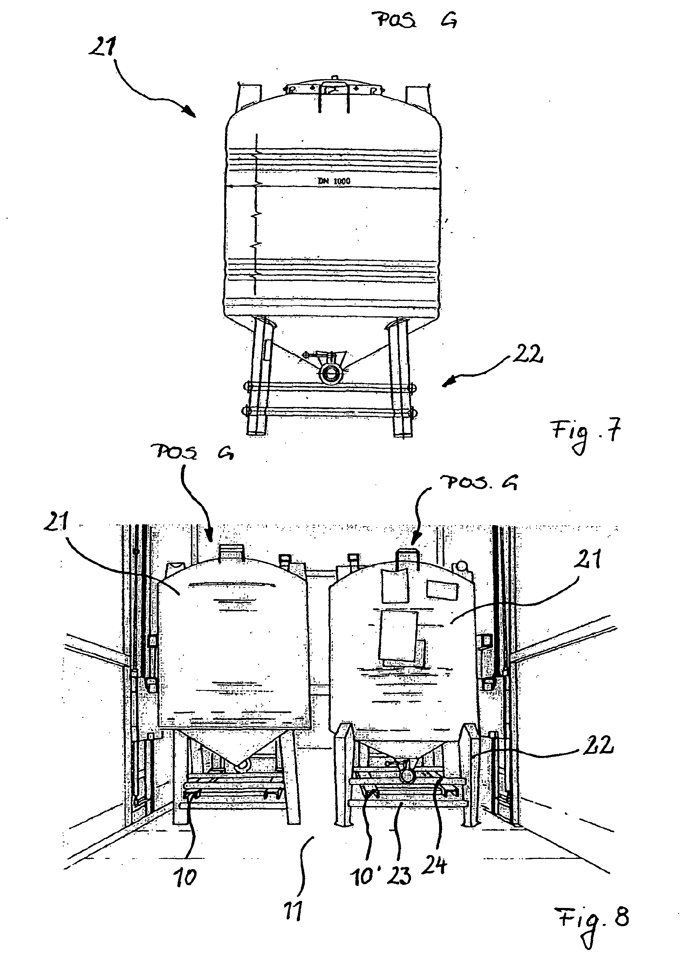

Figur 6 zeigt das an den Schlitten 4 befestigte Aufnahmegestell 5, insbesondere eine Aufnahmegabel 6 desselben. Ebenfalls gezeigt ist das Seil 9 des Seilpaares 9, 9', welches das Aufnahmegestell 5 in der gezeigten Aufnahmestellung A hält.

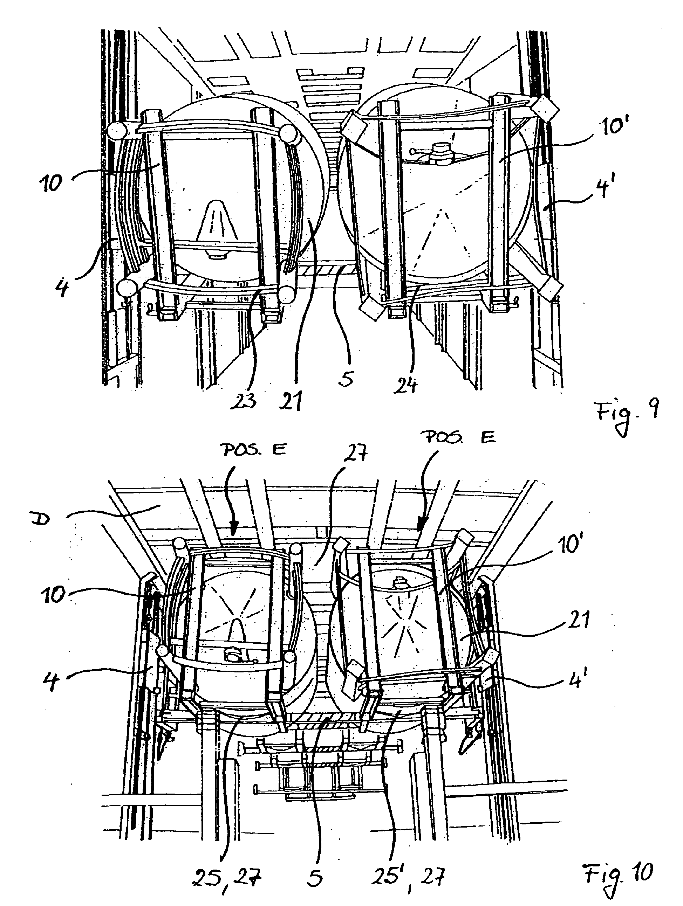

Figur 7 zeigt ein Behältnis 21, welches hier als Container für Lebensmittel, insbesondere Fruchtzubereitung, ausgebildet ist. Besonders dabei ist, dass sich bei derartigen Containern das Volumen der einfüllbaren Lebensmittel erheblich kleiner ist als das Lagervolumen welches der Container mit seinem Gestell 22 einnimmt. Der Grund hierfür liegt in der besonderen Verwendung der Container. Sie müssen von oben befüllt und von unten entleert werden. Beim Entleeren ist es zudem erwünscht, dass die relativ zähflüssige Fruchtzubereitung - allein durch die Schwerkraft bedingt - möglichst vollständig den Container verlässt. Schließlich müssen derartige Container noch einfach zu reinigen sein. Diese Vorgaben führen unter anderem zu der gezeigten zylindrischen Form mit ihren besonderen Anforderungen an Transport- und Lagerungsbedingungen.

Die Figuren 8, 9 und 10 zeigen in ihrer Zusammenschau den gesamten Verlagerungsprozess für zwei in Figur 7 gezeigten Behältnisse 21. Es zeigt dabei besonders die Figur 8 die Aufnahmerahmen 10, 10' in ihrer Aufnahmestellung A und ihrem Eingriff in die Gestelle 22 der Behältnisse 21, welche in der Grundposition G aufrecht stehen.

In der Praxis werden die Behältnisse 21 auf Handhubwagen geladen, um z. B. an Laderampen auf die Ladefläche 11 transportiert zu werden. Die Schienen eines Handhubwagens liegen dabei von unten an den unteren Querstangen 23 des Gestells an. Durch geeignet eingestellten Hub wird erreicht, dass der Aufnahmerahmen 10, 10' in der Aufnahmestellung A in einen Zwischenraum des Gestells 22 eingreift. Beim Absenken des Handhubwagens liegt das Behältnis 21 schließlich wie in Figur 8 gezeigt in einer Grundposition G mit den oberen Querstangen 24 des Gestells 22 auf dem Aufnahmerahmen 10, 10' auf.

Figur 9 zeigt eine Zwischenstellung zwischen Aufnahmestellung A und Lagerstellung L, wobei die Unterseiten der Behältnisse 21 durch die gedrehte Stellung deutlich zu sehen sind.

Figur 10 zeigt schließlich die Lagerstellung L des Aufnahmegestells 5 und den beiden von diesem aufgenommenen Behältnissen 21 in ihrer Einlagerungsposition E. In dieser Stellung bzw. Position ist genügend Platz bzw. Höhe vorhanden, andere Behältnisse 21 gleicher Bauart unter das Aufnahmegestell 5 stehend einzulagern und zu transportieren. Für eine sichere Einlagerung der Behältnisse 21 weist das Aufnahmegestell 5 noch den Behältnissen 21 angepasste Aussparungen 25, 25' auf, die mit einem elastischen Material 27 belegt sind. Ebenso sind die Kontaktstellen an der Decke D des Laderaums mit einem solchen elastischen Material 27 versehen.

### Bezugszeichenliste

- 1: Verlagerungsvorrichtung
- 2,2': Wand
- 3, 3': Rahmen
- 4, 4': Schlitten
- 5: Aufnahmegestell
- 6, 6': Aufnahmegabeln
- 7: Scharnier
- 8: Seil
- 8, 8': Seilpaar
- 9: Seil
- 9, 9': Seilpaar
- 10, 10': Aufnahmerahmen
- 11: Ladefläche
- 12, 12': Anschlagelement
- 13, 13': Anschlagschiene
- 14: Spannelement
- 15: Querschiene
- 16: Rolle
- 17: Hubstange
- 18: Hydraulikhubzylinder
- 19: Rolle
- 20: Auge
- 21: Behältnis
- 22: Gestell
- 23: Querstange
- 24: Querstange
- 25, 25': Aussparung
- 26: Drehachse
- A: Aufnahmestellung
- D: Decke
- E: Einlagerungsposition
- G: Grundposition
- L: Lagerstellung

## Patentansprüche

1. Straßenfahrzeug zum Transport von Behältnissen (21), mit einem von einer Ladefläche (11), Wänden (2. 2') und einer Decke (D) begrenzten Laderaum, sowie mindestens einer Verlagerungsvorrichtung (1), die von einer Aufnahmestellung (A) in eine Lagerstellung (L) bewegbar ist, wodurch mindestens ein Behältnis (21) von einer Grundposition (G), in der es ladeflächennah innerhalb des Laderaums angeordnet ist und auf der Verlagerungsvorrichtung (1) aufgebbar oder von dieser aufnehmbar ist, in eine Einlagerungsposition (E) innerhalb des Laderaums überführbar ist, in der zwischen der Ladefläche (11) und der Verlagerungsvorrichtung (1) sowie der Ladefläche (11) und dem Behältnis (21) ein Freiraum verbleibt, **dadurch gekennzeichnet, dass** das Behältnis (21) in der Einlagerungsposition (E) gegenüber der Grundposition (G) um eine horizontale Drehachse (26) gedreht ist.

2. Straßenfahrzeug nach dem vorangegangenen Anspruch, **dadurch gekennzeichnet, dass** die Verlagerungsvorrichtung (1) ein Aufnahmegestell (5) aufweist, welches L-förmige Aufnahmegabeln (6, 6') aufweist.

3. Straßenfahrzeug nach dem vorangegangenen Anspruch, **dadurch gekennzeichnet, dass** das Aufnahmegestell (5) um eine parallel zu der Ladefläche (11) verlaufende Drehachse (26) drehbar gelagert ist.

4. Straßenfahrzeug nach dem vorangegangenen Anspruch, **dadurch gekennzeichnet, dass** das Aufnahmegestell (5) an mindestens einem Schlitten (4,4') befestigt ist, der ausschließlich translatorisch bewegbar ist.

5. Straßenfahrzeug nach Anspruch 4, **dadurch gekennzeichnet, dass** die translatorische Bewegung des Schlittens (4, 4') des Aufnahmegestells (5) durch ein Anschlagelement (12, 12') zumindest teilweise in eine Drehbewegung überführbar ist.

6. Straßenfahrzeug nach einem der vorangegangenen Ansprüche, **dadurch gekennzeichnet, dass** das Aufnahmegestell (5) von der Aufnahmestellung (A) um einen im wesentlichen rechten Winkel in die Lagerstellung (L) drehbar ist.

7. Straßenfahrzeug nach einem der vorangegangenen Ansprüche, **dadurch gekennzeichnet, dass** das Aufnahmegestell (5) zusammenklappbar und **dadurch** in eine deckennähere Stellung als die Lagerstellung (L) bewegbar ist.

8. Straßenfahrzeug nach einem der vorangegangenen Ansprüche, **dadurch gekennzeichnet, dass** das Aufnahmegestell (5) und Teile der Decke (D) des Laderaums im Bereich der Kontaktstellen mit dem Behältnis (21) mit einem elastischen Material (27) sowie mit dem Behältnis (21) angepassten Aussparungen (25, 25') versehen sind.

9. Straßenfahrzeug nach einem der vorangegangenen Ansprüche, **dadurch gekennzeichnet, dass** von jeder Verlagerungsvorrichtung (1) zwei Behältnisse (21) aufnehmbar sind und dass in Längsrichtung des Laderaums eine Mehrzahl von Verlagerungsvorrichtungen (1) hintereinander angeordnet sind, wobei die Aufnahmegabeln (6, 6') einer Zugangsöffnung zu dem Laderaum zugeordneten Verlagerungsvorrichtung (1) in der Aufnahmestellung (A) mit ihren Vorderenden der Zugangsöffnung abgewandt sind, wohingegen die Vorderenden der Ladegabeln sämtlicher übriger Verlagerungsvorrichtungen (1) in der Aufnahmestellung (A) der Zugangsöffnung zugewandt sind.

10. Straßenfahrzeug nach einem der vorangegangenen Ansprüche, **dadurch gekennzeichnet, dass** sämtliche Verlagerungsvorrichtungen (1) mittels jeweils mindestens eines Hydraulikzylinders (18) antreibbar sind, die mittels desselben Hydraulikaggregats mit Druck beaufschlagbar sind.

## Claims

1. A road vehicle for transporting containers (21), comprising a cargo area delimited by a loading surface (11), walls (2, 2') and a ceiling (D), and at least one moving apparatus (1) which can be moved from a receiving position (A) to a storage position (L), as a result of which at least one container (21) can be moved from a basic position (G) in which it is arranged closed to the loading surface within the cargo area and can be placed on the moving apparatus (1) or be received by the same to a storage position (E) within the cargo area in which a clearance remains between the loading surface (11) and the moving apparatus (1) and the loading surface (11) and the container (21), **characterized in that** the container (21) is rotated in the storage position (E) relative to the basic position (G) about a horizontal rotational axis (26).

2. A road vehicle according to the preceding claim, **characterized in that** the moving apparatus (1) comprises a receiving frame (5) which comprises L-shaped pick-up forks (6, 6').

3. A road vehicle according to the preceding claim, **characterized in that** the receiving frame (5) is rotatably held about a rotational axis (26) extending parallel to the loading surface (11).

4. A road vehicle according to the preceding claim, **characterized in that** the receiving frame (5) is fastened to at least one carriage (4, 4') which can be exclusively moved in a translatory fashion.

5. A road vehicle according to claim 4, **characterized in that** the translatory movement of the carriage (4, 4') of the receiving frame (5) can be converted by a stop element (12, 12') at least partly into a rotational movement.

6. A road vehicle according to one of the preceding claims, **characterized in that** the receiving frame (5) is rotatable from the receiving position (A) to the storage position (L) about a substantially right angle.

7. A road vehicle according to one of the preceding claims, **characterized in that** the receiving frame (5) can be folded together and can be moved to a position closer to the ceiling than the storage position.

8. A road vehicle according to one of the preceding claims, **characterized in that** the receiving frame (5) and parts of the ceiling (D) of the cargo area are provided in the region of the contact points with the container (21) with an elastic material (27) and with recesses (25, 25') adjusted to the container (21).

9. A road vehicle according to one of the preceding claims, **characterized in that** two containers (21) can be received by each moving apparatus (1) and that a plurality of moving apparatuses (1) are arranged successively in the longitudinal direction of the cargo area, with the pick-up forks (6, 6') of a moving apparatus (1) associated with an access opening to the cargo area being averted in the receiving position (A) from the access opening with their front ends, whereas the front ends of the pick-up forks of all other moving apparatuses (1) face the access opening in the receiving position (A).

10. A road vehicle according to one of the preceding claims, **characterized in that** all moving apparatuses (1) can be driven by at least one hydraulic cylinder (18) each, which can be pressurized by means of the same hydraulic unit.

## Revendications

1. Véhicule routier destiné au transport de récipients (21) du type comportant un espace de chargement délimité par un plateau de chargement (11), des parois (2, 2') et un plafond (D) ainsi qu' au moins un dispositif de transfert (1) mobile depuis une position de réception (A) vers une position de stockage (L) de sorte qu'au moins un récipient (21) puisse être transféré, depuis une position de base (G) dans laquelle il est disposé à proximité du plateau de chargement au sein de l'espace de chargement et apte à être placé sur, ou reçu par, le dispositif de transfert (1) vers une position de stockage (E) au sein de l'espace de chargement dans laquelle il reste un espace libre entre le plateau de chargement (11) et le dispositif de transfert (1) ainsi qu'entre le plateau de chargement (11) et le récipient (21), **caractérisé en ce que**, dans la position de stockage (E), le récipient (21) a subi une rotation autour d'un axe de rotation horizontal (26) par rapport à la position de base (G).

2. Véhicule routier selon la revendication précédente, **caractérisé en ce que** le dispositif de transfert (1) comporte un support de réception (5) comportant des fourches de réception (6, 6') en L.

3. Véhicule routier selon la revendication précédente, **caractérisé en ce que** le support de réception (5) est monté mobile en rotation autour d'un axe de rotation (26) qui s'étend parallèlement au plateau de chargement (11).

4. Véhicule routier selon la revendication précédente, **caractérisé en ce que** le support de réception (5) est fixé à au moins un chariot (4, 4') qui est mobile en translation uniquement.

5. Véhicule routier selon la revendication 4, **caractérisé en ce que** le mouvement de translation du chariot (4, 4') du support de réception (5) est susceptible d'être transformé du moins en partie en un mouvement de rotation par l'intermédiaire d'un élément de butée (12, 12').

6. Véhicule routier selon l'une quelconque des revendications précédentes, **caractérisé en ce que** le support de réception (5) est susceptible de subir une rotation sensiblement à angle droit depuis la position de réception (A) vers la position de stockage (L).

7. Véhicule routier selon l'une quelconque des revendications précédentes, **caractérisé en ce que** le support de réception (5) est susceptible d'être replié et de ce fait d'être amené dans une position plus proche du plafond que la position de stockage (L).

8. Véhicule routier selon l'une quelconque des revendications précédentes, **caractérisé en ce que** le support de réception (5) et des parties du plafond (D) de l'espace de chargement sont munis, à la hauteur des endroits de contact avec le récipient (21), d'un matériau élastique (27) ainsi que de découpes (25, 25') adaptées au récipient (21).

9. Véhicule routier selon l'une quelconque des revendications précédentes, **caractérisé en ce que** chaque dispositif de transfert (1) peut recevoir deux récipients (21) et que plusieurs dispositifs de transfert (1) sont disposés les uns derrière les autres dans le sens de la longueur de l'espace de chargement, les fourches de réception (6, 6') d'un dispositif de transfert (1) associé à une ouverture d'accès à l'espace de chargement ayant leurs extrémités antérieures détournées de l'ouverture d'accès dans la position de réception (A) tandis que les extrémités antérieures des fourches de chargement de tous les autres dispositifs de transfert (1) sont tournées vers l'ouverture d'accès dans la position de réception (A).

10. Véhicule routier selon l'une quelconque des revendications précédentes, **caractérisé en ce que** tous les dispositifs de transfert (1) sont susceptibles d'être entraînés par au moins un cylindre hydraulique (18) chacun, la pression pouvant être appliquée à ces cylindres hydrauliques au moyen du même groupe hydraulique.
